# EUROPEAN PATENT SPECIFICATION

(11) **EP 2 292 177 B1**
(45) Date of publication and mention of the grant of the patent: **08.02.2012**
(21) Application number: 10009356.6
(22) Date of filing: 08.09.2010
(51) Int. Cl.: A61C 8/00

(54) **Gingiva incising device**
Zahnfleischeinschneidegerät
Dispositif d'incision de gencive

(30) Priority: 08.09.2009 JP 2009207164
(43) Date of publication of application: 09.03.2011
(73) Proprietor: GC Corporation, Itabashi-ku Tokyo 174-8585 (JP)
(72) Inventor: Fujii, Naoto, Tokyo 174-8585 (JP)
(74) Representative: Müller-Boré & Partner Patentanwälte

(56) References cited:
- WO-A2-2004/098435
- JP-A- 5 293 124
- JP-A- 8 196 549

## Description

The present invention relates to a gingiva incising device which can easily incise a gingiva particularly at a tongue side and a lip side of an alveolar ridge at a position where a dental implant fixture is embedded at a time of carrying out a dental implant treatment.

As a treatment method for recovering a lost oral cavity function of a missing tooth portion, there has been frequently carried out a dental implant treatment for fixing a dental prosthesis to an oral cavity side of a dental implant fixture coming to an artificial tooth root which is embedded within a jawbone of the missing tooth portion so as to be bone-connected to the jawbone.

In this dental implant treatment, there has been executed generally a procedure of incising a gingiva on a surface of the jawbone by a surgical knife, making the jawbone expose by setting the incised gingiva to an expanded state, forming an embedment hole by cutting the jawbone with a drill, embedding the dental implant fixture and thereafter seaming the incised gingiva.

However, in the dental implant treatment as mentioned above, since the gingiva is incised widely and the gingiva is expanded in such a manner as to peel from the jawbone, a great damage is left in the gingiva, and a bitter pain is frequently applied to a patient together with a tumescence or the like. Further, since tissue of the gingiva which is greatly damaged as mentioned above is hard to regenerate, there is even a case that the gingiva is early cured after treatment by completely removing a part of the gingiva in comparison with treatment by leaving the gingiva.

With respect to a problem of the conventional treatment method as mentioned above, there is a rotary type gingiva incising device with gingiva thickness measuring device for incising a gingiva formed on a surface of an alveolar bone, characterized in that the rotary type gingiva incising device is provided with a cylinder member which is open at one end portion, is closed at the other end portion by a lid member and is formed in a cylindrical shape, a coupling portion which is attached to the lid member and is provided for coupling to a dental engine capable of rotating the rotary type gingiva incising device with gingiva thickness measuring device, a blade portion which is formed at the open end portion of the cylinder member, and incises the gingiva formed on a surface of an alveolar bone on the basis of a rotation of the cylinder member, and a measuring scale which is formed on an outer periphery of the cylinder member, and is provided for measuring a thickness of the gingiva after incising the gingiva formed on the surface of the alveolar bone or during the incision (refer, for example, to Japanese Unexamined Patent Publication No. 2008-104700).

If the gingiva is incised by using the rotary type gingiva incising device, it is possible to easily form a hole for inserting the dental implant fixture to the gingiva. However, since the rotary type gingiva incising device is only structured such that its blade portion formed on the end portion of the cylinder member is rotated by the dental engine such as a hand piece or the like so as to incise the gingiva, it is hard to incise the gingiva on the jawbone formed as a bank shape.

In other words, the jawbone is formed as a bank shape which is rapidly inclined as a whole toward a tongue side and a lip side, and the gingiva lies so as to cover the jawbone formed as the bank shape. Accordingly, if it is intended to incise the gingiva by the gingiva incising device only structured such that the blade portion is provided on a surface which is vertical to a center axis of the cylinder member at a leading end of the cylinder member, the blade portion can not be inserted into the gingiva any more after the leading end of the cylinder member comes into contact with a surface at a top portion of the bank-shaped jawbone, so that there is a problem that the gingiva on the jawbone at the tongue side and the lip side, which is rapidly inclined so as to get depressed, is left uncut.

As the gingiva incising device for incising the gingiva, there is a gingiva incising device which uses push-cutting blades having cross sections in various shapes such as a round shape, a triangular shape, a rectangular shape, an oval shape and the like at a leading end of a tubular member, (refer, for example, to the first aspect of the present invention and paragraph 0013 of Japanese Unexamined Patent Publication No. 8-196549). If this gingiva incising device is used, the gingiva can be incised by selectively using the push-cutting blades in correspondence to the gingiva to be incised, however, a leading end of the tubular member comes into contact with a surface at the top portion of the jawbone and the push-cutting blade at the leading end of the tubular member can not be inserted to the gingiva any more, only by using the tubular members having the different cross sectional shapes as mentioned above. Therefore, it is impossible to solve the problem that the gingiva on the jawbone at the tongue side and the lip side which is rapidly inclined so as to get depressed largely, is left uncut.

WO - A - 2004 098 435 describes a gingiva incising device having a main body portion provided with a grip portion at its rear end side and having a cylinder portion at its leading end side, wherein the cylinder portion is longer than a thickness of a gingiva, has approximately the same diameter as a diameter of a dental implant fixture and has a cutting blade portion for incising the gingiva, said cutting blade portion being formed as a protrusion on the leading edge of the cylinder portion.

The present invention is made by taking the problem mentioned above into consideration, and an object of the present invention is to provide a gingiva incising device which can easily incise a gingiva particularly at a tongue side and a lip side of a jawbone formed as a bank shape.

The inventors of the present invention has completed the present invention by finding the following matter, as a result of devoting themselves to making a study for solving the problem mentioned above. In accordance with the present invention, a gingiva incising device is structured so as to have

a main body portion provided with a grip portion at its rear end side and having a cylinder portion at its leading end side, wherein the cylinder portion is longer than a thickness of a gingiva, has approximately the same diameter as a diameter of a dental implant fixture and has a cutting blade portion for incising the gingiva formed on a whole periphery of the leading end of said cylinder portion, wherein said cutting blade portion has a portion which protrudes gradually from a position closest to the grip portion toward a position away from the grip portion. In accordance with this structure, it is possible to securely incise the gingiva by inserting the portion protruding little by little in the cutting blade portion into the gingiva on the jawbone at the tongue side and the lip side which is rapidly inclined so as to largely get depressed.

Further, in the case that the portion which protrudes gradually toward the position away from the grip portion of the cutting blade portion is formed over the whole periphery of the leading end of the cylinder portion, the gradually protruding portion is large, thus the gingiva can be securely incised by deeply inserting, and such is preferable. Further, in the case that a portion at the position closest to the grip portion of the cutting blade portion is formed in a predetermined length on a leading end periphery of the cylinder portion, the gingiva can be incised while avoiding the jawbone coming to an obstacle by the gradually protruding portion comparatively being made small, and such is preferable. In the case that the leading end of the cylinder portion is formed into such a shape that a portion over at least approximately one half of the periphery of the leading end of the cylinder portion is, in use inserted into the gingiva, the gingiva incising device is hard to come off from the gingiva at a time of inserting the cutting blade portion into the gingiva so as to rotate, the gingiva can be easily incised in an accurate cylindrical shape, and such is preferable.

Accordingly, it is possible to securely incise the gingiva by inserting the gradually protruding portion of the cutting blade portion into the gingiva on the jawbone at the tongue side and the lip side which is rapidly inclined so as to get depressed largely.
Fig. 1 is a side view showing an embodiment of a gingiva incising device in accordance with the present invention;
Fig. 2 is a perspective view of the gingiva incising device in Fig. 1;
Fig. 3 is a sectional view of the gingiva incising device in Fig. 1;
Fig. 4 is a side view showing another embodiment of a gingiva incising device in accordance with the present invention;
Fig. 5 is a perspective view of the gingiva incising device in Fig. 4;
Fig. 6 is a sectional view of the gingiva incising device in Fig. 4;
Fig. 7 is a side view showing a conventional gingiva incising device;
Fig. 8 is a perspective view of the gingiva incising device in Fig. 7;
Fig. 9 is a sectional view of the gingiva incising device in Fig. 7;
Fig. 10 is a sectional view showing a positional relationship between a jawbone and a gingiva;
Fig. 11 is a sectional view showing a state in which the conventional gingiva incising device in Fig. 7 is inserted into a gingiva;
Fig. 12 is a sectional view showing a state in which the conventional gingiva incising device is drawn out from the state in Fig. 11;
Fig. 13 is a sectional view showing a manner that a gradually protruding portion of the gingiva incising device in Fig. 1 is positioned in one of a tongue side and a lip side and is inserted into the gingiva so as to incise a left gingiva portion; and
Fig. 14 is a sectional view showing a state in which the gingiva incising device is drawn out together with the gingiva from the state in Fig. 13.

A description will be in detail given below of a gingiva incising device in accordance with the present invention with reference to the accompanying drawings.

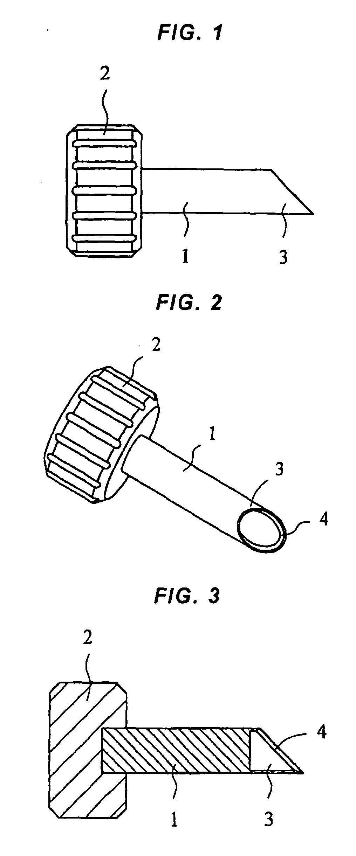

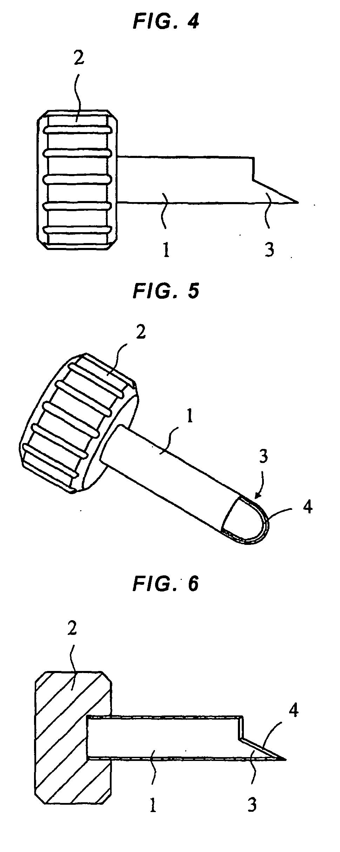

In the drawings, reference symbol G denotes a gingiva, and reference symbol J denotes a jawbone. Further, reference numeral 1 denotes a main body portion of the gingiva incising device in accordance with the present invention. The main body portion 1 has a cylinder portion 3 as mentioned below at a leading end side thereof, and at least the cylinder portion 3 is hollow, however, the main body portion 1 may be hollow as shown in Fig. 6 or may be solid as shown in Fig. 3.

Reference numeral 2 denotes a grip portion provided at a rear end side of the main body portion 1. The grip portion 2 may be an independent body from the main body portion 1, or may be integrated with the main body portion 1. Further, a cutting blade portion 4 at a leading end mentioned below is rotated by rotating the grip portion 2 in a state of being gripped by hand or via a rotary tool.

Reference numeral 3 denotes a cylinder portion which is longer than a thickness of a gingiva G and has approximately the same diameter as a diameter of a dental implant fixture, and reference numeral 4 denotes a cutting blade portion for incising the gingiva, which is formed on a whole periphery of a leading end of the cylinder portion 3. The cutting blade portion 4 has a portion which protrudes gradually from a position closest to the grip portion 2 toward a position being away from the grip portion 2.

In the case that the portion protruding gradually to the position being away from the grip portion 2 of the cutting blade portion 4 is formed over a whole periphery of a leading end of the cylinder portion 3 as shown in Figs. 1 to 3, the gradually protruding portion is large. Accordingly, the gingiva G can be securely incised by deeply inserting, and such is preferable. Further, in the case that the portion at the position closest to the grip portion 2 in the cutting blade portion 4 is formed in a predetermined length on a leading end periphery of the cylinder portion 3 as shown in Figs. 4 to 6, the gingiva G can be incised while avoiding the jawbone J coming to an obstacle by the gradually protruding position being made comparatively small, and such is preferable. Further, in the case that the leading end of the cylinder portion 3 is formed into such a shape that a portion over at least approximately one half of the periphery of the leading end of the cutting blade portion 4 can be inserted into the gingiva G, the gingiva incising device is hard to come off from the gingiva G at a time of inserting the cutting blade portion 4 to the gingiva G so as to rotate, the gingiva G can be easily incised in an accurate cylindrical shape, and such is preferable.

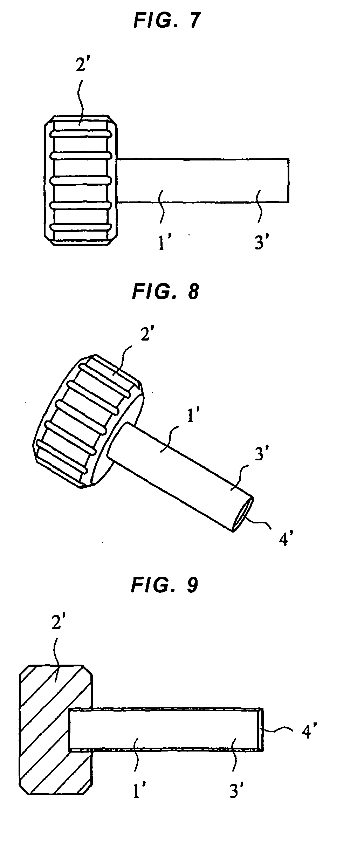

In order to actually use the gingiva incising device in accordance with the present invention, it is possible to use it in combination with a conventional gingiva incising device constructed by a main body portion 1', a grip portion 2' provided at a rear end side of the main body portion 1', and a cylinder portion 3' in which a cutting blade portion is formed on a whole periphery of its leading end which is a surface vertical to a center axis thereof, as shown in Figs. 7 to 9, or use it singly.

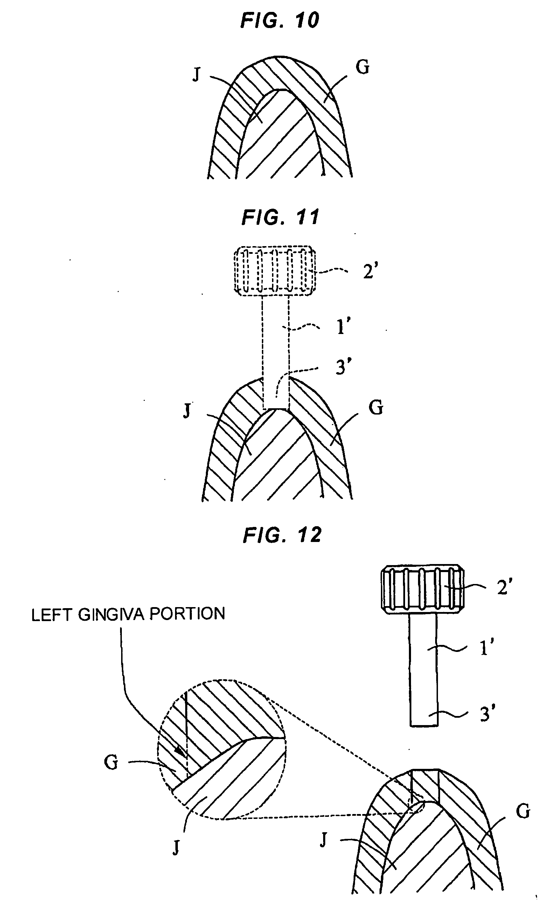

First of all, in the case of using in combination with the conventional gingiva incising device, the conventional gingiva incising device is struck into the gingiva G in a state shown in Fig. 10 or is inserted while being rotated until a leading end of the cylinder portion 3' comes into contact with the jawbone J as shown in Fig. 11. Accordingly, it is possible to form a cylindrical cut in the gingiva G as shown in Fig. 12, however, there comes a state in which parts of the gingiva G at the tongue side and the lip side are left uncut.

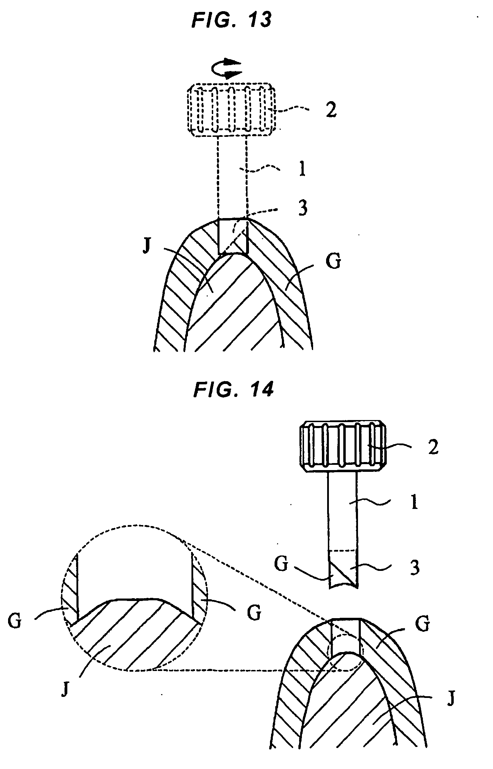

The left parts of the gingiva G at the tongue side and the lip side are incised by inserting the cutting blade portion 4 at the leading end side of the cylinder portion 3 of the gingiva incising device in accordance with the present invention into the gingiva G in such a manner that the portion protruding gradually toward the position away from the grip portion 2 is positioned at one of the tongue side and the lip side, and rotating it one cycle while gripping the grip portion 2, with respect to the left parts of the gingiva G, as shown in Figs. 13 and 14.

In the case of using in combination with the conventional gingiva incising device as mentioned above, first of all, the conventional gingiva incising device is used, a cylindrical rough cut is formed in the gingiva G, and the left parts of the gingiva G at the tongue side and the lip side are incised by forming the cut by using the gingiva incising device in accordance with the present invention.

Next, in order to incise the gingiva G by using the gingiva incising device in accordance with the present invention singly, for example, the portion protruding gradually to the position away from the grip portion 2 in the cutting blade portion 4 is positioned at a gingiva G portion at one of the tongue side and the lip side, and the device is struck in, in such a manner that the cylinder portion 3 of the gingiva incising device in accordance with the present invention can be inserted deeply into the gingiva G, so that a cut is formed in the gingiva G portion by the cutting blade portion 4. Then, the portion protruding gradually to the position away from the grip portion 2 in the cutting blade portion 4 is moved to the gingiva G portion at a position on a surface at the top portion side of the bank-shaped jawbone J, by rotating the grip portion 2 in one direction while gripping the grip portion 2, and a cut is formed in the gingiva G at the position on the surface at the top portion side of the jawbone J by the cutting blade portion 4. Next, the portion protruding gradually to the position away from the grip portion 2 in the cutting blade portion 4 is positioned at the gingiva G portion at the other of the tongue side and the lip side so as to form a cut by rotating the grip portion 2 in the same direction while gripping the grip portion 2, and a cut is formed in the gingiva G portion at the position on the surface at the top portion side of the jawbone J by further rotating in the same direction. It is possible to incise the gingiva G by only the gingiva incising device in accordance with the present invention, by forming the cuts over the approximately cylindrical whole periphery in the gingiva G as mentioned above.

In the case that the gingiva G is incised by singly using the gingiva incising device in accordance with the present invention as mentioned above, it is necessary to form the cuts in the gingiva G while gripping and rotating the grip portion 2. Accordingly, it is preferable that the leading end of the cylinder portion 3 is formed into such a shape that a portion over at least an approximately one half of the periphery of the leading end of the cutting blade portion 4 can be inserted to the gingiva G, in order to make the gingiva incising device hard to come off from the gingiva G at that time and make it possible to incise the gingiva G in an accurate cylindrical shape. In the case, it is preferable to use a dental template having a bore-tube provided with a guide cylinder, for example, disclosed by the PCT international application No. WO 2003/071972. The guide cylinder has a predetermined inclination at a predetermined position and predetermined standard sizes according to kinds of the dental implant fixture.

The dental template is produced based on an impression, CT scan data of a jawbone, or the like, taken for every patient. The dental template is formed in a mouthpiece shape, and has the bore-tube having the guide cylinder formed at a the position and an inclination according to which the dental implant fixture will be embedded. Thus, the position for a dental implant fixture can be formed at accurate only by mounting the dental template, inserting a gingiva incising device into the guide cylinder, and incising the gingiva.

## Claims

1. A gingiva incising device having a main body portion (1) provided with a grip portion (2) at its rear end side and having a cylinder portion (3) at its leading end side, wherein the cylinder portion (3) is longer than a thickness of a gingiva, has approximately the same diameter as a diameter of a dental implant fixture and has a cutting blade portion (4) for incising the gingiva formed on a whole periphery of the leading end of said cylinder portion (3),
**characterized in that**
said cutting blade portion (4) has a portion which protrudes gradually from a position closest to the grip portion (2) toward a position away from the grip portion (2).

2. The gingiva incising device as claimed in claim 1, wherein the portion which protrudes gradually toward the position away from the grip portion (2) of the cutting blade portion (4) is formed over the whole periphery of the leading end of the cylinder portion (3).

3. The gingiva incising device as claimed in claim 1, wherein a portion at the position closest to the grip portion (2) of the cutting blade portion (4) is formed in a predetermined length on a leading end periphery of the cylinder portion (3).

4. The gingiva incising device as claimed in any one of claims 1 to 3, wherein the leading end of the cylinder portion (3) is formed into such a shape that a portion over at least approximately one half of the periphery of the leading end of the cylinder portion (3) is, in use, inserted into the gingiva.

## Patentansprüche

1. Zahnfleischeinschneidevorrichtung mit einem Hauptkörperabschnitt (1), der mit einem Griffabschnitt (2) an seiner hinteren Endseite versehen ist und an seiner führenden Endseite einen Zylinderabschnitt (3) hat, wobei der Zylinderabschnitt (3) länger als eine Dicke eines Zahnfleischs ist, ungefähr den gleichen Durchmesser wie ein Durchmesser einer Zahnimplantatbefestigung hat und einen Schneidklingenabschnitt (4) zum Einschneiden des Zahnfleisch hat, der auf einem gesamten Umfang des führenden Endes des Zylinderabschnitts (3) ausgebildet ist,
**dadurch gekennzeichnet, dass**
der Schneidklingenabschnitt (4) einen Abschnitt hat, der von einer Position am nächsten zu dem Greifabschnitt (2) in Richtung einer Position entfernt von dem Greifabschnitt (2) fortschreitend vorsteht.

2. Zahnfleischeinschneidevorrichtung nach Anspruch 1, wobei der Abschnitt, der fortschreitend in die Richtung der Position entfernt von dem Griffabschnitt (2) des Schneidklingenabschnitts (4) vorsteht, über den gesamten Umfang des führenden Endes des Zylinderabschnitts (3) ausgebildet ist.

3. Zahnfleischeinschneidevorrichtung nach Anspruch 1, wobei ein Abschnitt an der Position am nächsten zu dem Griffabschnitt (2) des Schneidklingenabschnitts (4) in einer vorgegebenen Länge auf einem Umfang des führenden Endes des Zylinderabschnitts (3) ausgebildet ist.

4. Zahnfleischeinschneidevorrichtung nach einem der Ansprüche 1 bis 3, wobei das führende Ende des Zylinderabschnitts (3) zu einer derartigen Form ausgebildet ist, dass ein Abschnitt über wenigstens ungefähr eine Hälfte des Umfangs des führenden Endes des Zylinderabschnitts (3) in das Zahnfleisch eingeführt wird.

## Revendications

1. Un dispositif d'incision de gencive ayant une portion de corps principale (1) pourvue d'une portion de préhension (2) sur son côté arrière et ayant une portion cylindrique (3) sur son côté avant, dans lequel la portion cylindrique (3) est plus longue qu'une épaisseur de gencive, a approximativement le même diamètre que le diamètre d'une fixation d'implant dentaire et possède une portion de lame d'incision (4) destinée à inciser la gencive, formée sur toute la périphérie de l'extrémité avant de ladite portion cylindrique (3),
**caractérisé en ce que**
ladite portion de lame d'incision (4) a une portion qui fait saillie graduellement depuis une position la plus proche de la portion de préhension (2) à une position éloignée de la portion de préhension (2).

2. Le dispositif d'incision de gencive tel que revendiqué à la revendication 1, dans lequel la portion qui fait graduellement saillie vers la position éloignée de la portion de préhension (2) de la portion de lame d'incision (4) est formée sur toute la périphérie de l'extrémité avant de la portion cylindrique (3).

3. Le dispositif d'incision de gencive tel que revendiqué à la revendication 1, dans lequel une portion à la position la plus proche de la portion de préhension (2) de la portion de lame d'incision (4) est formée dans une longueur prédéterminée sur la périphérie de l'extrémité avant de la portion cylindrique (3).

4. Le dispositif d'incision de gencive tel que revendiqué dans l'une quelconque des revendications 1 à 3, dans lequel l'extrémité avant de la portion cylindrique (3) a une forme telle qu'une portion s'étendant sur au moins une moitié de la périphérie de l'extrémité avant de la portion cylindrique (3) est insérée dans la gencive lorsque le dispositif est utilisé.
